(19) **Europäisches Patentamt / European Patent Office / Office européen des brevets**

(11) **EP 2 009 908 A2**

(12) **EUROPEAN PATENT APPLICATION**

(43) Date of publication:
**31.12.2008 Bulletin 2009/01**

(51) Int Cl.:
**H04N 5/225** (2006.01)

(21) Application number: **08010280.9**

(22) Date of filing: **05.06.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **26.06.2007 JP 2007168010**

(71) Applicant: **Fujinon Corporation**
**Saitama-shi,**
**Saitama (JP)**

(72) Inventor: **Shinohara, Yoshikazu**
**Saitama-shi**
**Saitama (JP)**

(74) Representative: **Höhfeld, Jochen**
**Klunker Schmitt-Nilson Hirsch**
**Patentanwälte**
**Winzererstrasse 106**
**80797 München (DE)**

(54) **Imaging device, camera module, and mobile terminal apparatus**

(57)    An imaging device is provided and includes: an imaging element that outputs an imaging signal based on an optical image; and a diffractive optical element disposed on an image formation surface side of the imaging element.

## FIG. 1

## Description

This application is based on and claims priority under 35 U.S.C §119 from Japanese Patent Application No. 2007-168010, filed on June 26, 2007, the entire disclosure of which is herein incorporated by reference.

BACKGROUND OF THE INVENTION

1. Field of the Invention

The present invention relates to an imaging device having an imaging element such as a CCD (Charge Coupled Device) or a CMOS (Complementary Metal Oxide Semiconductor), a camera module having the imaging device, and a mobile terminal apparatus such as a mobile phone or a portable information terminal (PDA: Personal Digital Assistance).

2. Description of Related Art

In recent years, imaging elements such as CCD sensors and CMOS sensors have been improved greatly in miniaturization and an increase in the number of pixels. Accordingly, imaging device main bodies and lenses mounted thereon are required to have small size and high performance. In this situation, recently, in order to achieve miniaturization, imaging lens systems configured to have a relatively small number of lenses which are two or three lenses have been developed. For example, in Japanese Patent No. 3685486, an imaging lens, which is designed to be reduced in size and be improved in performance by effectively arranging aspheric surfaces in a two-lens configuration, has been disclosed.

However, it is difficult to decrease a total length of the lens system and simultaneously well correct chromatic aberration when using a small number of lenses.

SUMMARY OF THE INVENTION

An object of an illustrative, non-limiting embodiment of the invention is to provide an imaging device adapted to achieve miniaturization when combining with an imaging lens and to achieve reduction in chromatic aberration generated in a lens system, a camera module, and a mobile terminal apparatus.

According to an aspect of the invention, there is provided an imaging device includes an imaging element that outputs an imaging signal based on an optical image, and a diffractive optical element disposed on an image formation surface side of the imaging element.

In the imaging device, the diffractive optical element is disposed on an image formation surface side of the imaging element. Thus, the diffractive optical element can be made to have a function of correcting chromatic aberration generated in an imaging lens. With such a configuration, even when the imaging device is combined with the imaging lens that can not sufficiently correct chromatic aberration, it is possible to correct the chromatic aberration. With such a configuration, it is possible to design the imaging lens so as to lay emphasis on a decrease in total length thereof, and thus it is possible to achieve miniaturization of the whole when an imaging lens is combined.

In the imaging device, the diffractive optical element may have a plane parallel plate as a substrate and may have a diffractive structure on at least one surface thereof.

In this case, the diffractive structure of the diffractive optical element is disposed on the flat surface, and thus it is possible to minimize performance deterioration caused by a manufacturing error. Therefore, manufacturability is excellent.

In addition, the diffractive optical element may have a diffractive structure on an image-side surface thereof. In this case, the diffractive structure is formed on the image-side surface, and thus it is possible to form a simple diffractive structure. Therefore, it is advantageous to correct aberration.

In this case, there may be further provided a sealing member that seals a gap between the image-side surface of the diffractive optical element and the image formation surface of the imaging element. With such a configuration, the diffraction surface and the imaging surface are protected, and thus it is possible to prevent dust attachment thereto.

In addition, an infrared cut filter may be coated on an object-side surface of the diffractive optical element. With such a configuration, one optical member can be made to have a plurality of optical functions, and thus it is advantageous to reduce the number of components.

In addition, in the imaging device, the following conditional expression may be satisfied:

$$0.3 \text{ mm} < D\text{last} \qquad \cdot(1),$$

where Dlast is a distance between the image-side surface of the diffractive optical element and the image formation surface of the imaging element. With such a configuration, it is advantageous to correct aberration.

According to an aspect of the invention, a camera module includes an imaging device according to the invention, and an imaging lens that is disposed on an object side of the imaging device and forms an optical image of a subject on an image formation surface of the imaging element via the diffractive optical element.

In the camera module according to the invention, the diffractive optical element is disposed in the imaging device. Thus, the diffractive optical element can be made to have a function of correcting chromatic aberration generated in an imaging lens. With such a configuration, even when only the imaging lens can not sufficiently correct chromatic aberration, it is possible to correct the chromatic aberration. With such a configuration, it is possible to design the imaging lens so as to lay emphasis on a decrease in total length thereof, and thus it is possible to achieve miniaturization of the whole in which an imaging lens is combined. In addition, it is possible to obtain a high resolution imaging signal based on a high resolution optical image processed by chromatic aberration correction.

According to an aspect of the invention, the mobile terminal apparatus includes a camera module according to the invention.

In the mobile terminal apparatus, it is possible to obtain a high resolution imaging signal based on a high resolution optical image obtained by the camera module according to the invention, and it is also possible to obtain a photographed image of high resolution based on the imaging signal.


BRIEF DESCRIPTION OF THE DRAWINGS

The features of the invention will appear more fully upon consideration of the exemplary embodiment of the invention, which are schematically set forth in the drawings, in which:

Fig. 1 is a sectional view showing an exemplary configuration of an imaging device according to an exemplary embodiment of the invention;

Fig. 2 is a perspective view showing an exemplary configuration of a camera module according to an exemplary embodiment of the invention;

Figs. 3A-3B are perspective views showing an exemplary configuration of a mobile terminal apparatus according to an exemplary embodiment of the invention;

Fig. 4 is a lens sectional view showing a first exemplary configuration of an imaging lens corresponding to Example 1 in a camera module according to an exemplary embodiment of the invention;

Fig. 5 is a lens sectional view showing a second exemplary configuration of an imaging lens corresponding to Example 2 in a camera module according to an exemplary embodiment of the invention;

Fig. 6 is a lens sectional view showing a third exemplary configuration of an imaging lens corresponding to Example 3 in a camera module according to an exemplary embodiment of the invention;

Fig. 7 is a lens sectional view showing a fourth exemplary configuration of an imaging lens corresponding to Example 4 in a camera module according to an exemplary embodiment of the invention;

Fig. 8 is a lens sectional view showing a fifth exemplary configuration of an imaging lens corresponding to Example 5 in a camera module according to an exemplary embodiment of the invention;

Fig. 9 is a lens sectional view showing a sixth exemplary configuration of an imaging lens corresponding to Example 6 in a camera module according to an exemplary embodiment of the invention;

Fig. 10 is a lens sectional view showing a seventh exemplary configuration of an imaging lens corresponding to Example 7 in a camera module according to an exemplary embodiment of the invention;

Figs. 11A-11C are diagrams showing lens data of the imaging optical system according to Example 1, where Fig. 11A shows basic lens data, Fig. 11B shows aspherical surface data, and Fig. 11C shows diffraction surface data;

Figs. 12A-12C are diagrams showing lens data of the imaging optical system according to Example 2, where Fig. 12A shows basic lens data, Fig. 12B shows aspherical surface data, and Fig. 12C shows diffraction surface data;

Figs. 13A-13C are diagrams showing lens data of the imaging optical system according to Example 3, where Fig. 13A shows basic lens data, Fig. 13B shows aspherical surface data, and Fig. 13C shows diffraction surface data;

Figs. 14A-14C are diagrams showing lens data of the imaging optical system according to Example 4, where Fig. 14A shows basic lens data, Fig. 14B shows aspherical surface data, and Fig. 14C shows diffraction surface data;

Figs. 15A-15C are diagrams showing lens data of the imaging optical system according to Example 5, where Fig. 15A shows basic lens data, Fig. 15B shows aspherical surface data, and Fig. 15C shows diffraction surface data;

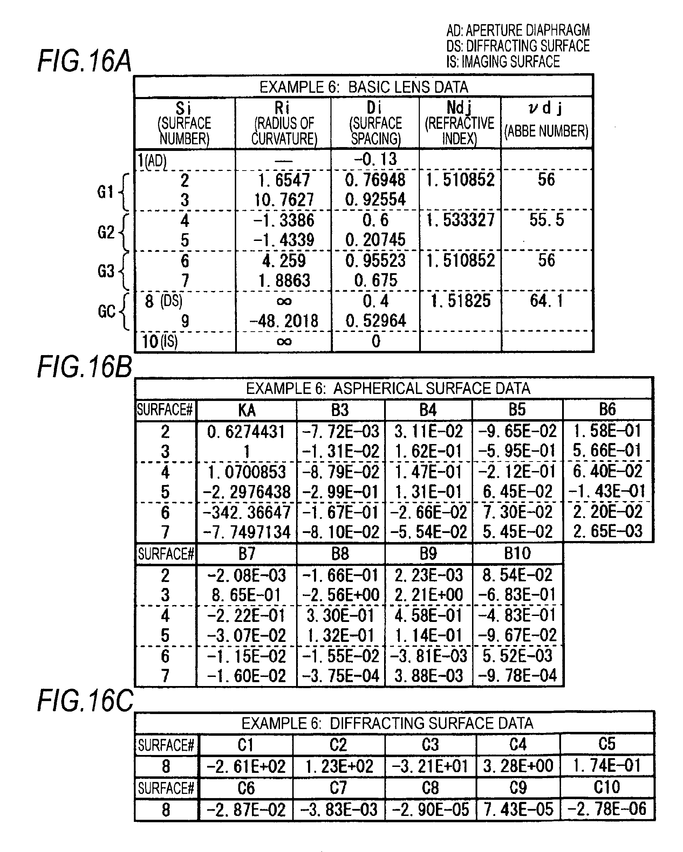

Figs. 16A-16C are diagrams showing lens data of the imaging optical system according to Example 6, where Fig. 16A shows basic lens data, Fig. 16B shows aspherical surface data, and Fig. 16C shows diffraction surface data;

Figs. 17A-17C are diagrams showing lens data of the imaging optical system according to Example 7, where Fig. 17A shows basic lens data, Fig. 17B shows aspherical surface data, and Fig. 17C shows diffraction surface data;

Fig. 18 is a diagram showing collectively values of conditional expressions according to the respective examples;

Figs. 19A-19C are diagrams showing various aberrations in the imaging optical system according to Example 1, where Fig. 19A shows spherical aberration, Fig. 19B shows astigmatism, and Fig. 19C shows distortion;
Figs. 20A-20C are diagrams showing various aberrations in the imaging optical system according to Example 2, where Fig. 20A shows spherical aberration, Fig. 20B shows astigmatism, and Fig. 20C shows distortion;
Figs. 21A-21C are diagrams showing various aberrations in the imaging optical system according to Example 3, where Fig. 21A shows spherical aberration, Fig. 21B shows astigmatism, and Fig. 21C shows distortion;
Figs. 22A-22C are diagrams showing various aberrations in the imaging optical system according to Example 4, where Fig. 22A shows spherical aberration, Fig. 22B shows astigmatism, and Fig. 22C shows distortion;
Fig. 23A-23C are diagrams showing various aberrations in the imaging optical system according to Example 5, where Fig. 23A shows spherical aberration, Fig. 23B shows astigmatism, and Fig. 23C shows distortion;
Figs. 24A-24C are diagrams showing various aberrations in the imaging optical system according to Example 6, where Fig. 24A shows spherical aberration, Fig. 24B shows astigmatism, and Fig. 24C shows distortion; and
Figs. 25A-25C are diagrams showing various aberrations in the imaging optical system according to Example 7, where Fig. 25A shows spherical aberration, Fig. 25B shows astigmatism, and Fig. 25C shows distortion.

DETAILED DESCRIPTION OF THE EXEMPLARY EMBODIMENTS

In a case of an imaging lens having the two-lens configuration, it can be considered to correct chromatic aberration by arranging a positive lens and a negative lens in order from the object side and using a high dispersion material in the negative lens. However, it is difficult to decrease a total length of the lens system and simultaneously sufficiently correct chromatic aberration. Hence, it is advantageous to correct aberration if the imaging device is made to have a function of correcting chromatic aberration which can not be completely corrected in the lens system.

In an imaging device or camera module according to an exemplary embodiment of the invention, the diffractive optical element is disposed on an image formation surface side of the imaging element. Thus, the diffractive optical element can be made to have a function of correcting chromatic aberration generated in an imaging lens, and it is possible to design the imaging lens so as to lay emphasis on a decrease in total length thereof. With such a configuration, it is possible to achieve miniaturization of the whole in which an imaging lens is combined and to achieve reduction in chromatic aberration generated in the lens system.

In addition, in a mobile terminal apparatus according to an exemplary embodiment of the invention, there are mounted a camera module according to an exemplary embodiment of the invention in which chromatic aberration is reduced. Therefore, it is possible to achieve miniaturization in a camera part. In addition, particularly, it is possible to obtain a high resolution imaging signal in which chromatic aberration is reduced, and it is also possible to obtain a photographed image of high resolution based on the imaging signal.

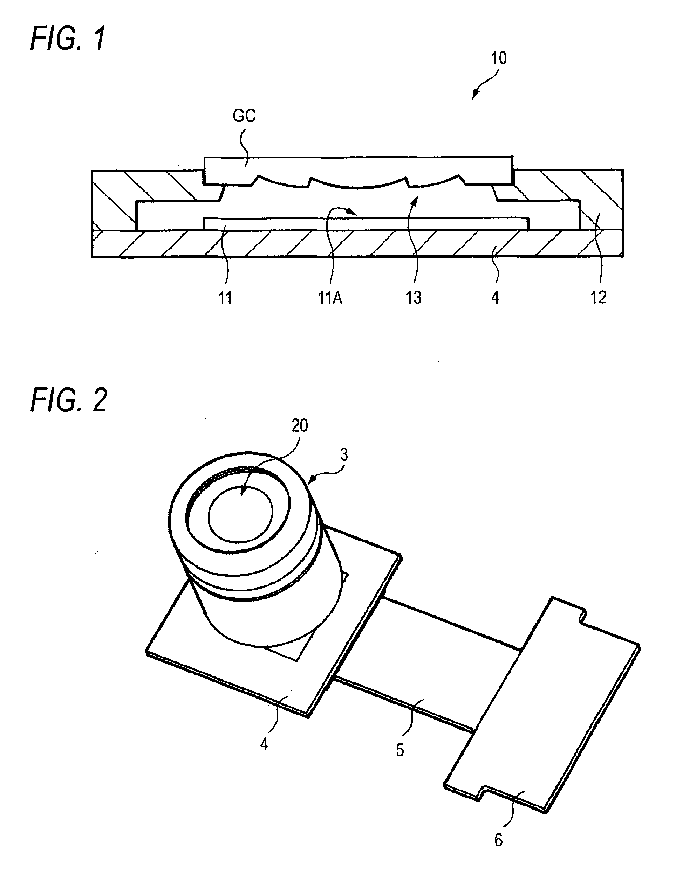

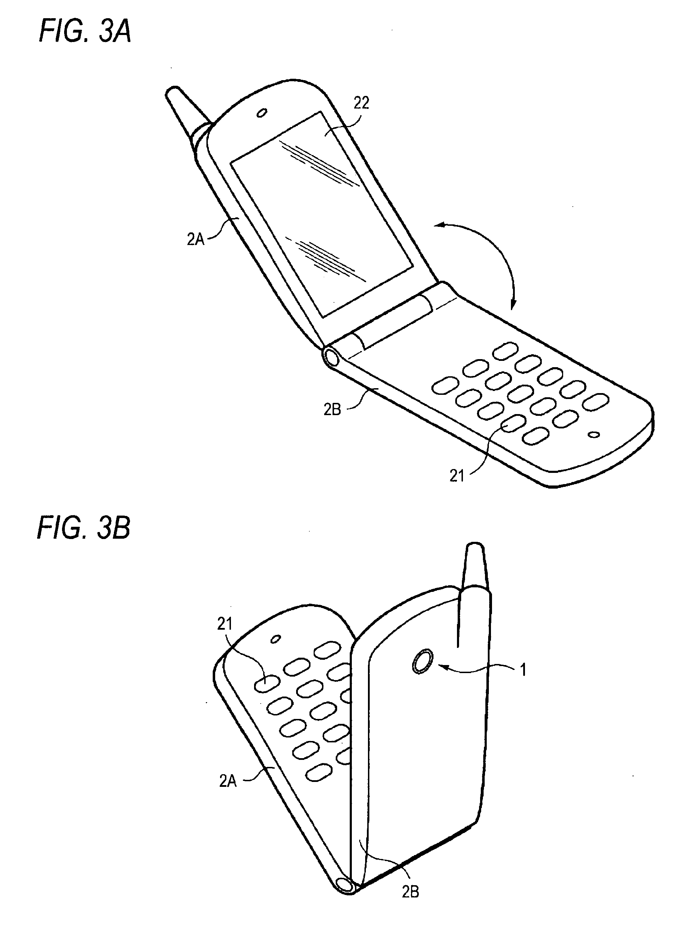

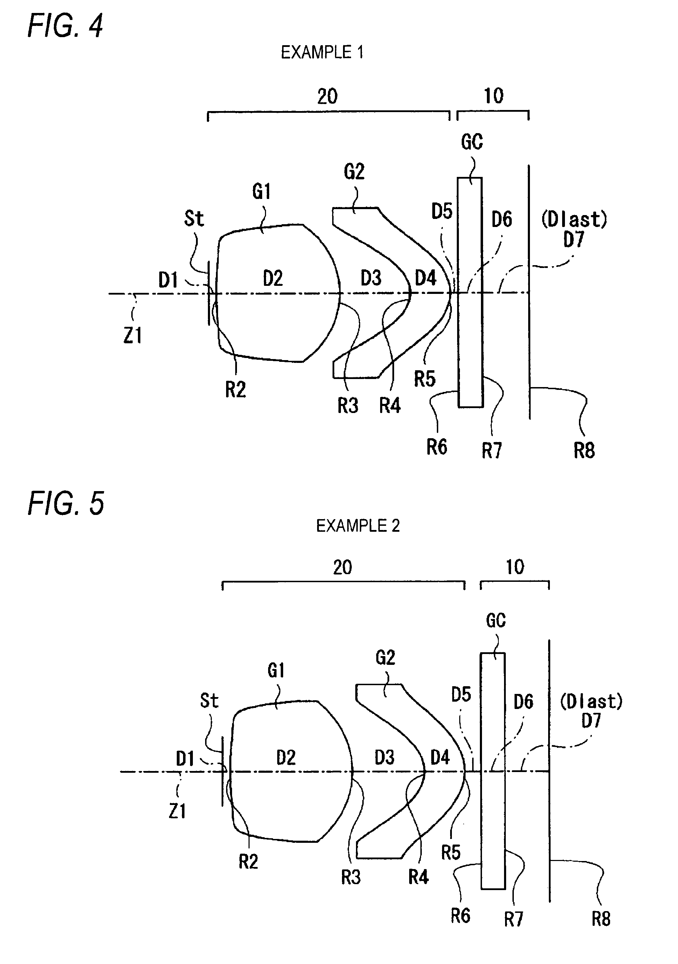

Fig. 1 shows an exemplary configuration of an imaging device according to an exemplary embodiment. Fig. 2 shows an exemplary configuration of a camera module having the imaging device 10 mounted thereon shown in Fig. 1. In addition, Figs. 3A and 3B show a mobile phone having a camera mounted thereon, as an example of a mobile terminal apparatus having the camera module mounted thereon. In addition, Figs. 4 to 10 show a first to a seventh exemplary configurations of an imaging lens 20 used by combining with the imaging device 10 shown in Fig. 1.

As shown in Fig. 1, the imaging device 10 according to the embodiment includes an imaging element 11 that outputs an imaging signal based on an optical image formed by an imaging lens 20 (for example, see Fig. 4), and a diffractive optical element GC that is disposed on an image formation 11A side of the imaging element 11. In the imaging device 10, a sealing member 12 seals a gap between an image-side surface of the diffractive optical element GC and the image formation surface 11A of the imaging element 11. The imaging element 11 is a solid-state imaging element such as a CCD or a CMOS.

The diffractive optical element GC diffracts light rays passing therethrough, for example, by forming a plurality of saw-like steps concentrically on a surface of a substrate made of glass or plastic. Such a structure is called a 'kinoform'. The diffractive optical element GC in the embodiment has a function of correcting chromatic aberration generated in the imaging lens 20. The diffractive optical element GC has at least one flat surface, and has a diffractive structure such as a kinoform type formed on the flat surface. For example, the diffractive optical element GC has a plane parallel plate as a substrate and has a diffractive structure formed on at least one flat surface thereof. In this case, it is preferred that the diffractive optical element GC have the plane parallel plate as a substrate and have the diffractive structure formed on an image-side flat surface thereof. In addition, in that case, an infrared cut filter may be coated on an object-side flat surface thereof.

In addition, the diffractive optical element GC may be configured to have the diffractive structure formed on a flat surface of a substrate that is formed of a curved surface and a flat surface opposite thereto (see Example 6 to be described later). In addition, the 'curved surface' is defined as a surface of which curvature is not zero. Moreover, the flat surface is defined as a surface of which curvature is zero.

It is preferred that the imaging device 10 satisfy the following conditional expression. In the expression, Dlast is a distance between the image-side surface of the diffractive optical element GC and the image formation surface 11 A of the imaging element 11.

$$0.3 \text{ mm} < D\text{last} \qquad (1)$$

As shown in Figs. 3A and 3B, the mobile phone in which a camera is mounted has an upper casing 2A and a lower casing 2B, and is configured to be able to freely rotate both of the casings in an arrow direction shown in Fig. 3A. In the lower casing 2B, an operation key 21 and the like are disposed. In the upper casing 2A, a camera section 1 (shown in Fig. 3B) and a display section 22 (shown in Fig. 3A) are disposed. The display section 22 is formed of a display panel such as a LCD (Liquid Crystal Display) or an EL (Electroluminescence) panel. The display section 22 is disposed on a surface of the upper casing 2A that is an inner surface in a state where the mobile phone is folded. The display section 22 is operable to display not only various menus for a telecommunication function but also images taken by the camera section 1. The camera section 1 is disposed on, for example, the rear side of the upper casing 2A. However, a location on which the camera section 1 is disposed is not limited to this.

The camera section 1 has a camera module on which the imaging device 10 according to the embodiment is mounted. As shown in Fig. 2, the camera module includes a barrel 3 in which an imaging lens 20 to be described later is placed, a supporting board 4 which supports the barrel 3, and the imaging element 11 (shown in Fig. 1) which is disposed on a location corresponding to the image formation plane of the imaging lens 20 on the supporting board 4. The camera module further includes a flexible board 5 which is electrically connected to the imaging element 11 on the supporting board 4, and a external connection terminal 6 which is configured to be connected to the flexible board 5 and be able to connected to a signal processing circuit of a terminal apparatus main body in mobile phones and the like having a camera. These components are integrally formed.

In addition, the mobile terminal apparatus according to the embodiment is not limited to a mobile phone having a camera, and for example may be a digital camera, a PDA, or the like.

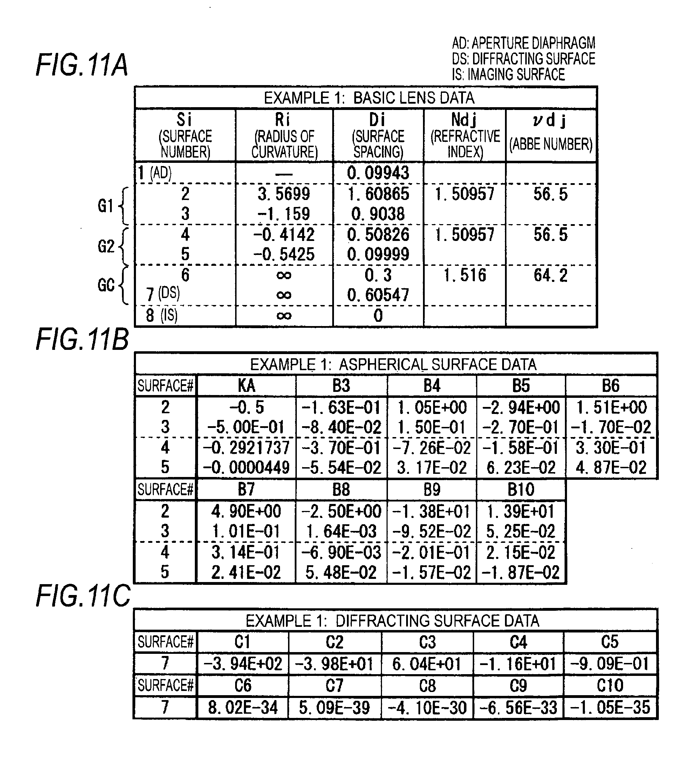

Fig. 4 shows a first exemplary configuration of the imaging lens 20 which is integrally combined with the imaging device 10 shown in Fig. 1 as the camera module shown in Fig. 2. The exemplary configuration corresponds to a first numerical example (shown in Figs. 11A, 11, and 11C) to be described later. Likewise, Figs. 5 to 10 show sectional views of second to seventh exemplary configurations corresponding to lens configurations of second to seventh numerical examples. In Figs. 4 to 10, the reference sign Ri represents a radius of curvature of i-th surface, where the number i is the sequential number that sequentially increases as it gets closer to an image side (an image formation side) when a surface closest to an object side is defined as a first surface. The reference sign Di represents an on-axis surface spacing between i-th surface and (i+1)th surface on an optical axis Z1.

The imaging lens 20 is optically designed under the premise of using the lens and the diffractive optical element GC of the imaging device 10 together which are combined with each other. An imaging location of the whole optical system in which the imaging lens 20 and the diffractive optical element GC are combined is optically designed so as to coincide with the image formation surface 11A of the imaging device 10.

The first to third exemplary configurations shown in Figs. 4 to 6 are examples of a two-lens configuration of the imaging lens 20. Specifically, the imaging lens 20 according to these exemplary configurations includes, in order from the object side along the optical axis Z1, an aperture diaphragm St, a first lens G1, and a second lens G2. In these exemplary configurations, the first lens G1 is formed as a positive lens which has a convex surface on the image side. The second lens G2 is formed as, for example, a positive or negative meniscus lens having a row refractive power. It is preferred that the first lens G1 and second lens G2 employ aspheric surfaces appropriate thereto.

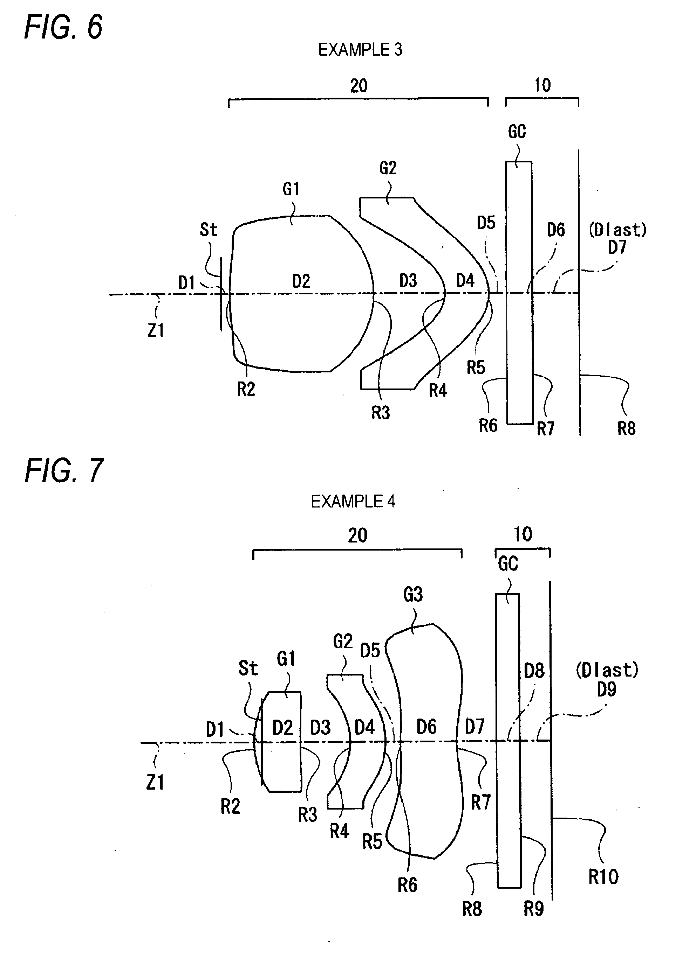

In addition, the fourth to seventh exemplary configurations shown in Figs. 7 to 10 are examples of a three-lens configuration of the imaging lens 20. Specifically, the imaging lens 20 according to these exemplary configurations includes, in order from the object side along the optical axis Z1, an aperture diaphragm St, a first lens G1, a second lens G2, and a third lens G3. In these exemplary configurations, the first lens G1 is formed as a positive lens which has a convex surface on the image side. The second lens G2 is formed as, for example, a positive or negative meniscus lens having a row refractive power. The third lens G3 is formed as, for example, a meniscus lens of which a shape in the vicinity of the optical axis is convex toward the object side. It is preferred that the respective lenses employ aspheric surfaces appropriate thereto.

Next, effects and advantages of the imaging device, the camera module, and the mobile terminal apparatus configured as described above will be described.

In the camera module shown in Fig. 2, an optical image formed by the imaging lens 20 is converted into an electric imaging signal by the imaging element 11 of the imaging device 10. Subsequently, the imaging signal is given as an output to the signal processing circuit in the terminal apparatus main body via the flexible board 5 and the external connection terminal 6. In this case, in the camera module, the imaging device 10 according to the embodiment is employed, and thus it is possible to obtain a high resolution imaging signal. In the terminal apparatus main body, it is possible to generate a high resolution image based on the imaging signal.

In the imaging device 10 and camera module according to the embodiment, the diffractive optical element GC is disposed on the image formation surface 11A side of the imaging element 11, and thus the diffractive optical element GC can be made to have a function of correcting chromatic aberration generated in the imaging lens 20. With such a configuration, even when the imaging device is combined with the imaging lens 20 that can not sufficiently correct chromatic aberration, it is possible to correct the chromatic aberration. With such a configuration, it is possible to design the imaging lens 20 so as to lay emphasis on a decrease in total length thereof, and thus it is possible to achieve miniaturization of the whole when an imaging lens 20 is combined. In addition, even when the imaging lens 20 is configured to have a relatively small number of lenses which are two or three lenses, aberration correction is applied to the whole in which the diffractive optical element GC is combined therewith, and thus it is possible to obtain a high resolution optical image. In addition, it is possible to obtain high resolution imaging signal based on a high resolution optical image processed by chromatic aberration correction.

In the imaging device 10 according to the embodiment, the diffractive structure of the diffractive optical element GC is disposed on the flat surface, and thus it is possible to minimize performance deterioration caused by a manufacturing error. Therefore, manufacturability is excellent. Particularly, in the diffractive optical element GC, the image-side flat surface thereof is formed as a diffraction surface 13. In this case, as compared with the case where the object side surface is formed as the diffraction surface 13, it is possible to form a simple diffractive structure. Therefore, it is advantageous to correct aberration. When the image-side flat surface is formed as a diffraction surface 13, it becomes easier to correct aberrations even by using a relatively small number of orbicular zones. Thus, it becomes easy to process the diffraction surface 13.

In addition, in the imaging device 10 there is further provided the sealing member 12 that seals the gap between the image-side surface of the diffractive optical element GC and the image formation surface 11A of the imaging element 11. In this case, the imaging surface 11A is protected, and thus it is possible to prevent dust attachment thereto. When the image-side surface is formed as the diffraction surface 13, the diffraction surface 13 is also protected, and thus it is possible to prevent dust attachment thereto.

In the imaging device 10, the diffractive optical element GC has not only the function of correcting chromatic aberration but also other functions as a cover glass, an infrared cut filter, and the like of protecting the imaging surface. For example, the infrared cut filter may be coated on the object-side flat surface of the diffractive optical element GC. In the past, it has been performed that an infrared cut filter or a protective glass is disposed in front of the imaging device. However, in the imaging device 10 according to the embodiment, one optical member (the diffractive optical element GC) can be made to have a plurality of optical functions of an infrared cut filter and a protective glass, and thus it is advantageous to reduce the number of components. Consequently, without increasing the number of components, the one optical member can be made to have a plurality of optical functions, and thus it is possible to realize a simple configuration.

The conditional expression (1) mentioned above represents an allowable range of the distance Dlast between the image-side surface of the diffractive optical element GC and the image formation surface 11 A of the imaging element 11. When the distance Dlast exceeds the allowable range of the conditional expression (1), the distance between the diffractive optical element GC and the imaging surface 11A (the imaging plane) becomes too close to each other, it is hard to sufficiently obtain a chromatic aberration reduction effect due to diffraction.

As described above, according to the imaging device 10 or the camera module of the embodiment, it is possible to achieve miniaturization of the whole in which the imaging lens 20 is combined and to achieve reduction in chromatic aberration generated in the lens system. In addition, according to the mobile terminal apparatus of the invention, there are mounted the camera module according to the invention in which chromatic aberration is reduced. Therefore, it is possible to achieve miniaturization in a camera part. In addition, particularly, it is possible to obtain a high resolution imaging signal in which chromatic aberration is reduced, and it is also possible to obtain a photographed image of high resolution based on the imaging signal.

Examples

Hereinafter, numerical examples of the imaging optical system in which the imaging device 10 and the imaging lens 20 according to the embodiment are combined with each other will be described in detail. In the following section, first to seventh numerical examples will be described collectively.

Figs. 11A, 11B, and 11C show specific lens data corresponding to the configuration of the imaging optical system shown in Fig. 4. Particularly, Fig. 11A shows basic lens data, Fig. 11B shows aspherical surface data, and Fig. 11C shows diffraction surface data. In the item of the surface number Si in the lens data shown in Fig. 11A, the number i represents the sequential number of i-th surface that sequentially increases as it gets closer to the image side when a surface of a component closest to the object side is defined as a first surface, with regard to the imaging optical system according to Example 1. In the item of the radius of curvature Ri, there are shown values (mm) of the radius of curvature of i-th surface from the object side to correspond to the reference sign Ri in Fig. 4. Likewise, in the item of the on-axis surface spacing Di, there are shown spaces (mm) on the optical axis between the i-th surface Si and the (i+1)th surface Si+1 on the optical axis from the object side. In the item of Ndj, there are shown values of the refractive index at the d-line (587.6 nm) of the j-th optical component from the object side. In the item of vdj, there are shown values of the Abbe number with respect to the d-line of the j-th optical component from the object side.

In the imaging optical system according to Example 1, both surfaces of the first lens G1 and second lens G2 are formed in an aspheric shape. In the basic lens data shown in Fig. 11A, the radiuses of curvature of these aspheric surfaces are represented as numerical values of the radius of curvature in the vicinity of the optical axis.

Fig. 11B shows aspherical surface data in the imaging optical system according to Example 1. In the numerical values represented as the aspherical surface data, the reference sign 'E' means that a numerical value following this is a 'power exponent' having a base of 10 and that this numerical value having a base of 10 and expressed by an exponential function is multiplied by a numerical value before the 'E'. For example, it means that, for '1.0E-02', '1.0×10$^{-2}$'.

In the aspherical surface data of the imaging optical system according to Example 1, there are noted coefficients $B_n$ and KA in an aspheric surface expression. The aspheric surface expression is given by the following expression (A). Specifically, the Z represents a length (mm) of a perpendicular line from a point, which has a height of h from the optical axis and is located on an aspheric surface, down on a plane (a plane perpendicular to the optical axis) which is tangential to an aspheric surface apex.

$$Z = CC \cdot h^2 / \{1 + (1 - KA \cdot CC^2 \cdot h^2)^{1/2}\} + \Sigma B_n \cdot h^n \qquad (A)$$

(n = a three or more integer),
where
Z is a depth (mm) of aspheric surface,
h is a distance (mm) from the optical axis (a height)
KA is an eccentricity
CC is a paraxial curvature equal to 1/R
(R: a paraxial radius of curvature)
$B_n$ is an n-th order aspheric surface coefficient.

The imaging optical system according to Example 1 is expressed as the aspheric surface coefficients $B_n$ in the range of $B_3$ to $B_{10}$ by effectively and properly using the order.

In addition, in the imaging optical system according to Example 1, the diffractive optical element GC is formed as a plane parallel plate (curvatures of the both surfaces are zero), and the image-side flat surface is formed as a diffraction surface. The diffractive structure of the diffractive optical element GC has a shape generating an optical path difference corresponding to a phase change amount φ of a wave surface obtained by optional distance r from the optical axis Z1. The phase change amount φ is calculated by the following phase difference function. In Fig. 11C, values of coefficient Ci (i = 1 to 10) in the phase difference function. In the numerical values, the reference sign 'E' means that a numerical value following this is a 'power exponent' having a base of 10 and that this numerical value having a base of 10 and expressed by an exponential function is multiplied by a numerical value before the 'E'. For example, it means that, for '1.0E-02', '1.0× 10$^{-2}$'.

$$\varphi(r) = C1 \cdot r^2 + C2 \cdot r^4 + C3 \cdot r^6 + C4 \cdot r^8 + C5 \cdot r^{10} + \cdots$$

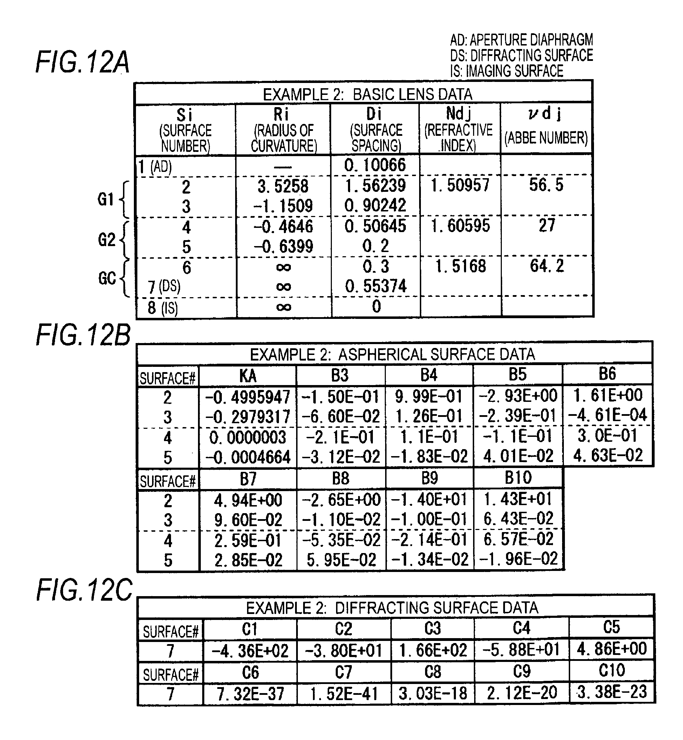

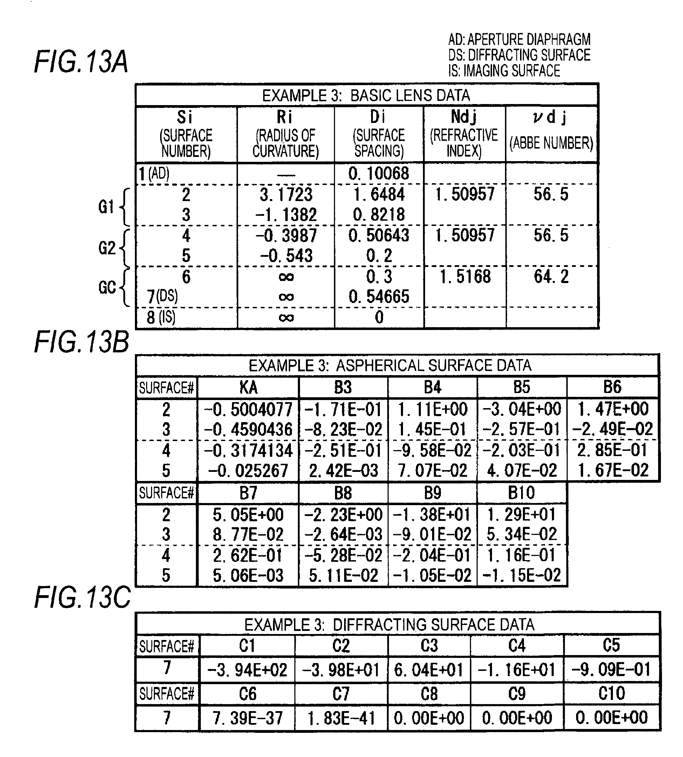

Similarly to the imaging optical system according to Example 1, Figs. 12A, 12B, and 12C show specific lens data corresponding to the configuration of the imaging optical system according to Example 2 shown in Fig. 5. Similarly, Figs. 13A, 13B, and 13C show specific lens data corresponding to the configuration of the imaging optical system according to Example 3 shown in Fig. 6. In Examples 2 and 3, similarly to the imaging optical system according to Example 1, the imaging lens 20 is formed of two lenses which are the first lens G1 and the second lens G2. In addition, both surfaces of the first lens G1 and the second lens G2 are formed in an aspheric shape. In addition, the diffractive optical element GC is formed as a plane parallel plate (curvatures of the both surfaces are zero), and the image-side flat surface is formed as a diffraction surface.

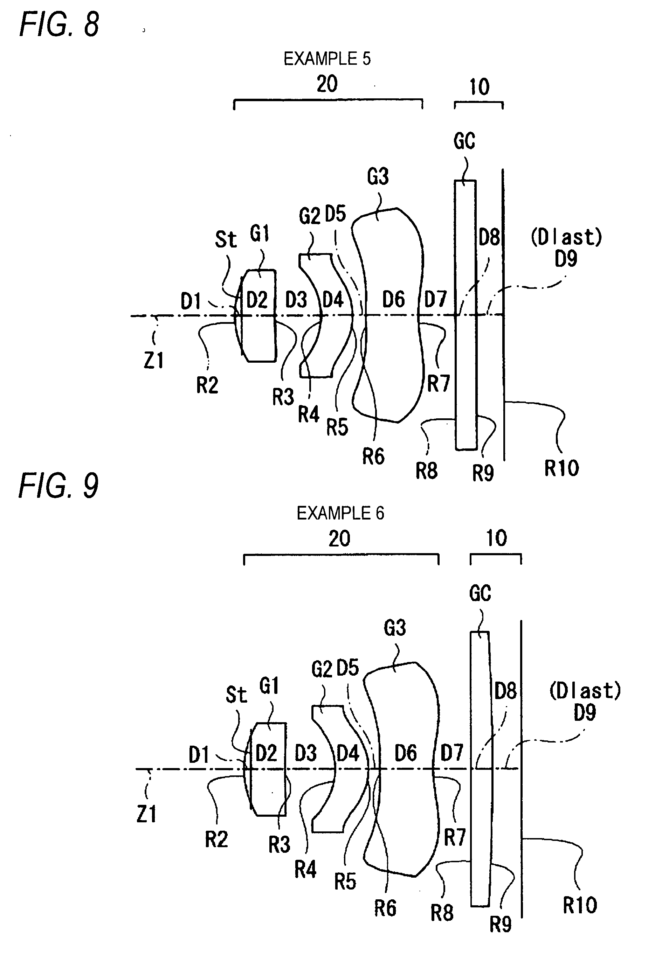

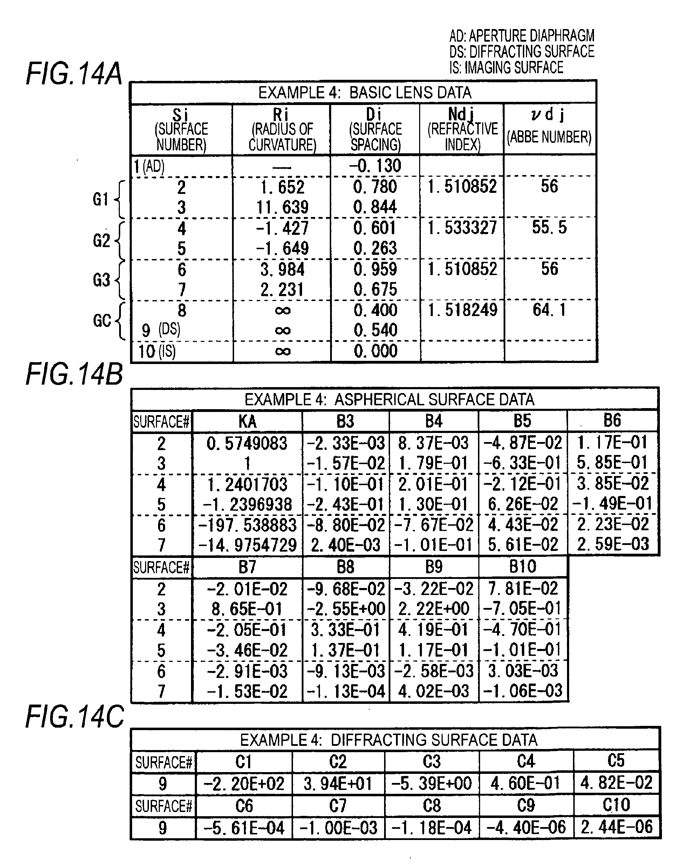

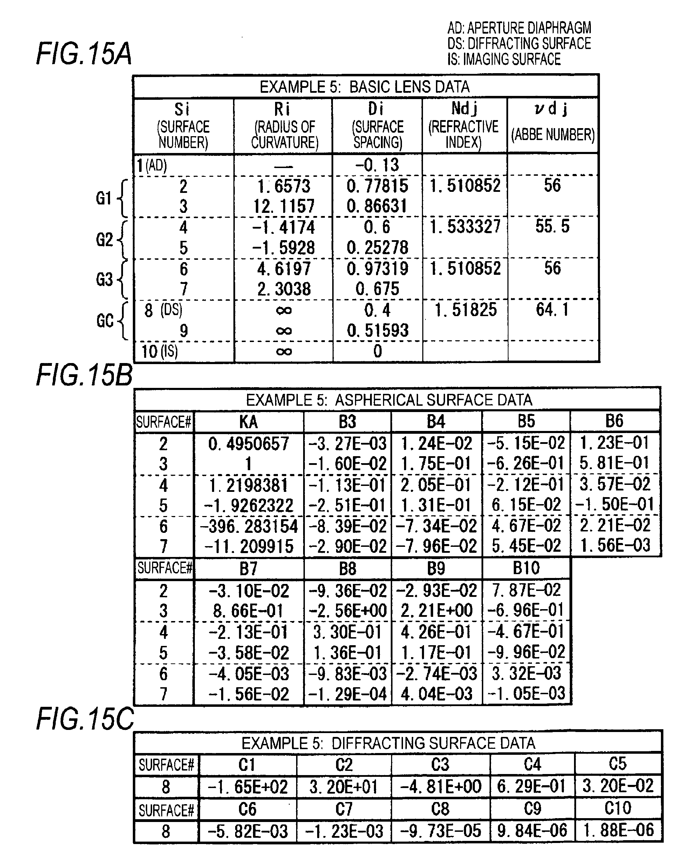

Similarly, Figs. 14A, 14B, and 14C show specific lens data corresponding to the configuration of the imaging optical system according to Example 4 shown in Fig. 7. Similarly, Figs. 15A, 15B, and 15C show specific lens data corresponding to the configuration of the imaging optical system according to Example 5 shown in Fig. 8. Similarly, Figs.

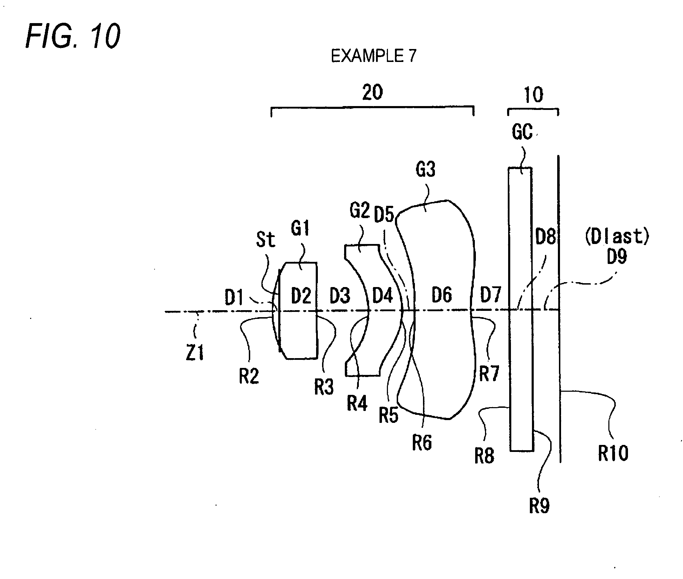

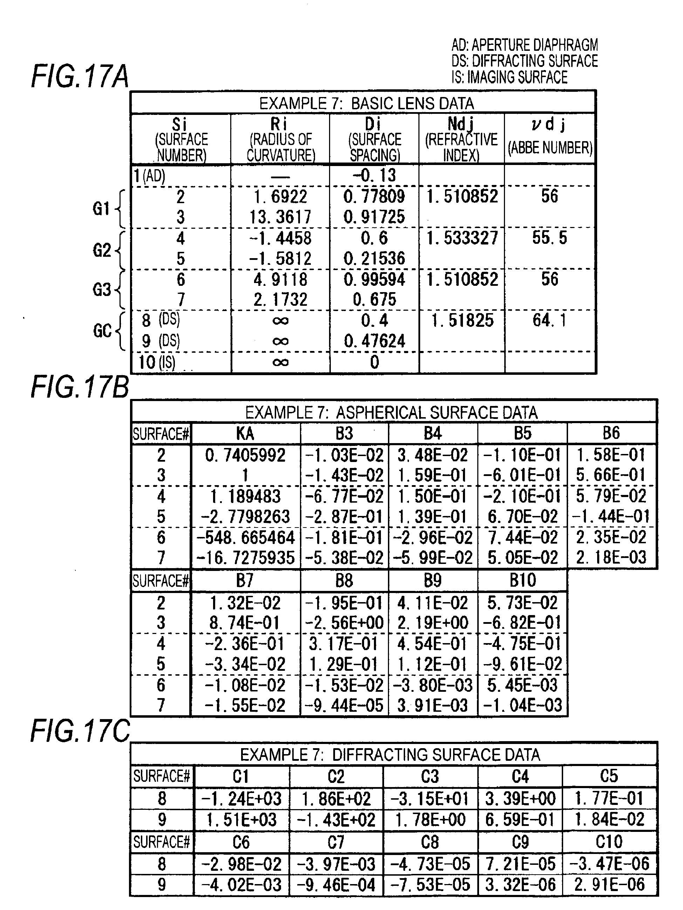

16A, 16B, and 16C show specific lens data corresponding to the configuration of the imaging optical system according to Example 6 shown in Fig. 9. Similarly, Figs. 17A, 17B, and 17C show specific lens data corresponding to the configuration of the imaging optical system according to Example 7 shown in Fig. 10.

In Examples 4 to 7, the imaging lens 20 is formed of three lenses which are the first lens G1, the second lens G2, and the third lens G3. In Examples 4 to 7, both surfaces of the first lens G1, the second lens G2, and the third lens G3 are formed in an aspheric shape. In addition, in Example 4, Example 5, and Example 7, the diffractive optical element GC is formed as a plane parallel plate (curvatures of the both surfaces are zero).

Particularly, in Example 4, the image-side flat surface facing is formed as a diffraction surface. In Example 5, the object-side flat surface is formed as a diffraction surface. In Example 7, the both flat surfaces are formed as diffraction surfaces, respectively. Meanwhile, in the Example 6, the object side surface of the diffractive optical element GC is formed as a flat surface, and the image-side surface is formed as a curved surface. In addition, the object-side flat surface is formed as a diffraction surface.

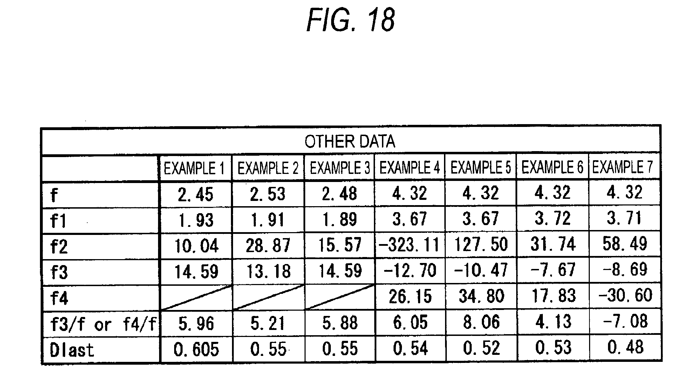

In addition, in Fig. 18, as the other data, there are shown values of a focal length f of the whole optical system and focal lengths of the respective sections with respect to the respective examples. In addition, with respect to Examples 1 to 3, f1 represents a focal length of the first lens G1, f2 represents a focal length of the second lens G2, and f3 represents a focal length of the diffractive optical element GC. With respect to Examples 4 to 7, f1 represents a focal length of the first lens G1, f2 represents a focal length of the second lens G2, f3 represents a focal length of the third lens G3, and f4 represents a focal length of the diffractive optical element GC. In Fig. 18, with respect to the respective examples, there are shown ratios (f3/f or f4/f) of the focal length of the diffractive optical element GC to the focal length f of the whole optical system. In addition, with respect to the respective examples, there are shown values of Dlast regarding the conditional expression mentioned above. As known from Fig. 18, the respective examples are in the allowable range of the conditional expression (1).

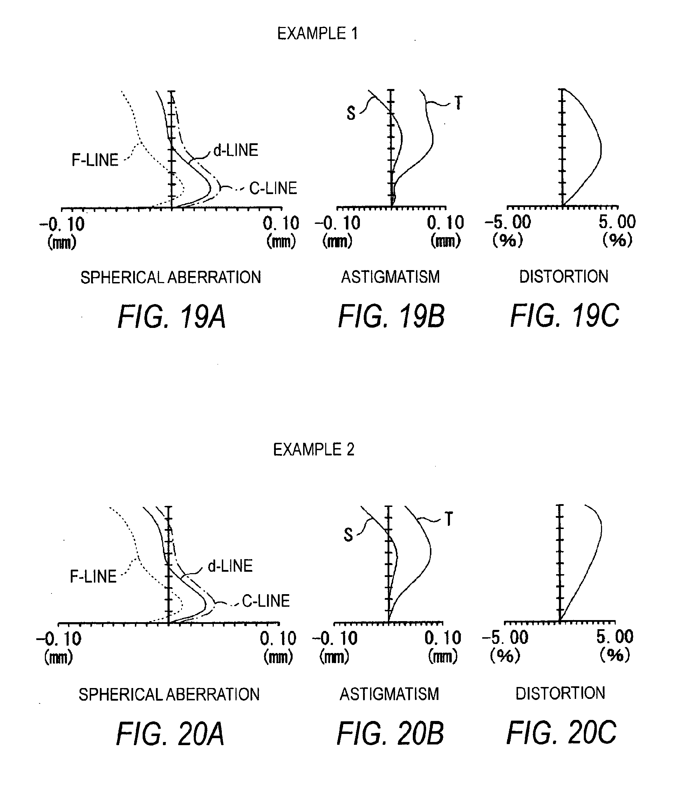

Figs. 19A to 19C show spherical aberration, astigmatism, distortion in the imaging optical system according to Example 1, respectively. In the aberration diagrams, aberrations at the time when d-line (a wavelength 587.6 nm) is set as a reference wavelength are shown. In the spherical aberration diagram, aberrations with respect to F-line (a wavelength 486.1 nm) and C-line (a wavelength 656.3 nm) are also shown. In the astigmatism diagram, the line S represents a sagittal direction, and the line T represents aberrations of a tangential direction.

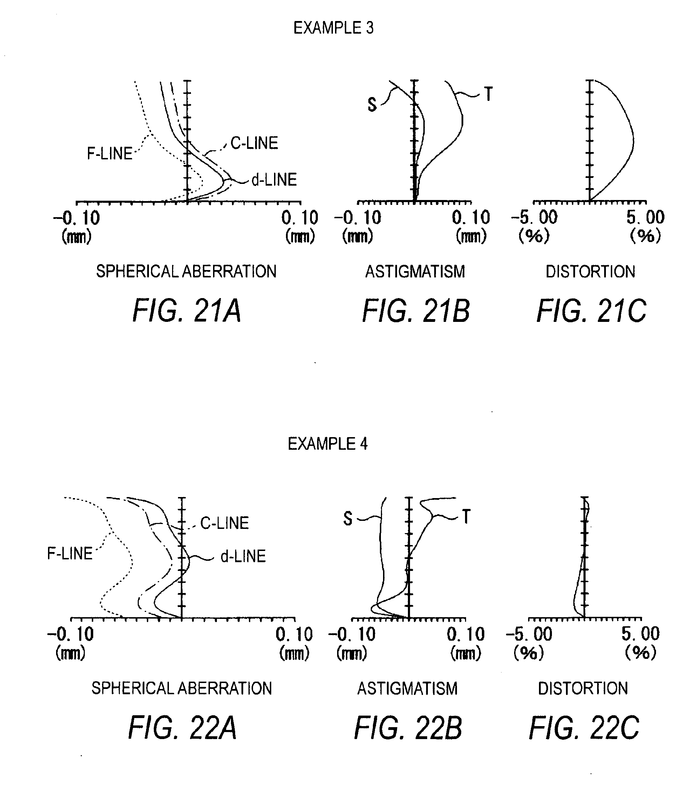

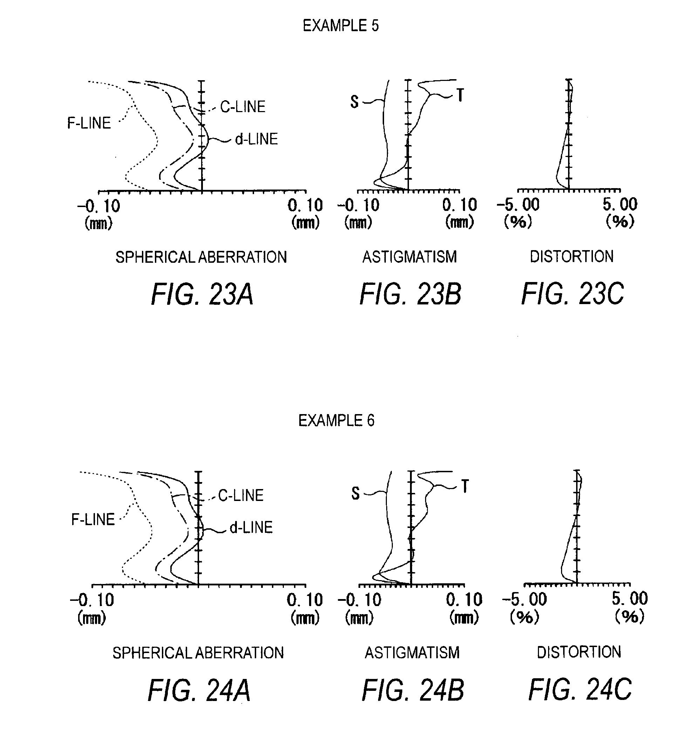

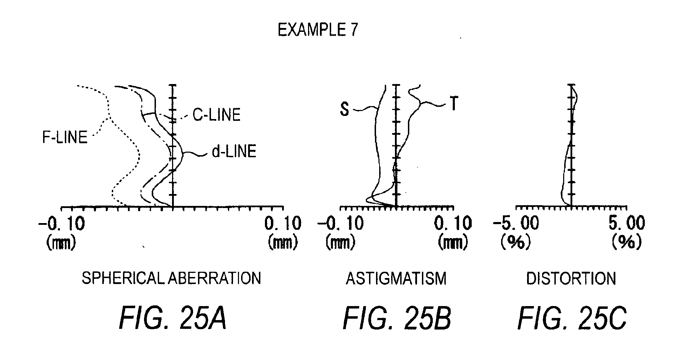

Likewise, Figs. 20A to 20C show various aberrations in the imaging optical system according to Example 2. Similarly, Figs. 21A to 21C show various aberrations in the imaging optical system according to Example 3. Similarly, Figs. 22A to 22C show various aberrations in the imaging optical system according to Example 4. Similarly, Figs. 23A to 23C show various aberrations in the imaging optical system according to Example 5. Similarly, Figs. 24A to 24C show various aberrations in the imaging optical system according to Example 6. Similarly, Figs. 25A to 25C show various aberrations in the imaging optical system according to Example 7.

As known from the numerical data and the aberration diagrams mentioned above, in each of the examples, there is provided an imaging optical system configured to achieve miniaturization when combining with the imaging lens 20 and to achieve reduction in chromatic aberration generated in the lens system

In addition, the invention is not limited to the embodiments and the examples, and may be modified to various forms. For example, the values of the radius of curvature, the on-axis surface spacing, and the refractive index in the lens components are not limited to the values shown in the numerical examples, and may have different values.

## Claims

1. An imaging device comprising:

    an imaging element that outputs an imaging signal based on an optical image; and
    a diffractive optical element disposed on an image formation surface side of the imaging element.

2. The imaging device according to claim 1, wherein the diffractive optical element includes a substrate of a plane parallel plate having a diffractive structure on at least one surface thereof.

3. The imaging device according to claim 2, wherein the plane parallel plate has the diffractive structure on an image-side surface thereof.

4. The imaging device according to claim 1, which satisfies conditional expression:

$$0.3 \text{ mm} < \text{Dlast} \qquad (1),$$

wherein Dlast is a distance between the image-side surface of the diffractive optical element and an image formation surface of the imaging element.

5. The imaging device according to claim 1, further comprising a sealing member that seals a gap between the image-side surface of the diffractive optical element and an image formation surface of the imaging element.

6. The imaging device according to claim 3, wherein the diffractive optical element has an infrared cut filter coated on an object-side surface thereof.

7. A camera module comprising:

an imaging device according to claim 1; and
an imaging lens disposed on an object side of the imaging device and forms an optical image of a subject on the image formation surface of the imaging element via the diffractive optical element.

8. The camera module according to claim 7, wherein the diffractive optical element has a function of correcting chromatic aberration generated in the imaging lens.

9. A mobile terminal apparatus comprising a camera module according to claim 7.

FIG. 1

FIG. 2

*FIG. 3A*

*FIG. 3B*

## FIG. 4

EXAMPLE 1

## FIG. 5

EXAMPLE 2

## FIG. 6

EXAMPLE 3

## FIG. 7

EXAMPLE 4

FIG. 8

EXAMPLE 5

FIG. 9

EXAMPLE 6

## FIG. 10

EXAMPLE 7

AD: APERTURE DIAPHRAGM
DS: DIFFRACTING SURFACE
IS: IMAGING SURFACE

**FIG.11A**

| Si (SURFACE NUMBER) | Ri (RADIUS OF CURVATURE) | Di (SURFACE SPACING) | Ndj (REFRACTIVE INDEX) | νdj (ABBE NUMBER) |
|---|---|---|---|---|
| 1 (AD) | — | 0. 09943 | | |
| 2 | 3. 5699 | 1. 60865 | 1. 50957 | 56. 5 |
| 3 | −1. 159 | 0. 9038 | | |
| 4 | −0. 4142 | 0. 50826 | 1. 50957 | 56. 5 |
| 5 | −0. 5425 | 0. 09999 | | |
| 6 | ∞ | 0. 3 | 1. 516 | 64. 2 |
| 7 (DS) | ∞ | 0. 60547 | | |
| 8 (IS) | ∞ | 0 | | |

EXAMPLE 1: BASIC LENS DATA

G1 { 2, 3 }
G2 { 4, 5 }
GC { 6, 7 (DS) }

**FIG.11B**

EXAMPLE 1: ASPHERICAL SURFACE DATA

| SURFACE# | KA | B3 | B4 | B5 | B6 |
|---|---|---|---|---|---|
| 2 | −0. 5 | −1. 63E−01 | 1. 05E+00 | −2. 94E+00 | 1. 51E+00 |
| 3 | −5. 00E−01 | −8. 40E−02 | 1. 50E−01 | −2. 70E−01 | −1. 70E−02 |
| 4 | −0. 2921737 | −3. 70E−01 | −7. 26E−02 | −1. 58E−01 | 3. 30E−01 |
| 5 | −0. 0000449 | −5. 54E−02 | 3. 17E−02 | 6. 23E−02 | 4. 87E−02 |

| SURFACE# | B7 | B8 | B9 | B10 |
|---|---|---|---|---|
| 2 | 4. 90E+00 | −2. 50E+00 | −1. 38E+01 | 1. 39E+01 |
| 3 | 1. 01E−01 | 1. 64E−03 | −9. 52E−02 | 5. 25E−02 |
| 4 | 3. 14E−01 | −6. 90E−03 | −2. 01E−01 | 2. 15E−02 |
| 5 | 2. 41E−02 | 5. 48E−02 | −1. 57E−02 | −1. 87E−02 |

**FIG.11C**

EXAMPLE 1: DIFFRACTING SURFACE DATA

| SURFACE# | C1 | C2 | C3 | C4 | C5 |
|---|---|---|---|---|---|
| 7 | −3. 94E+02 | −3. 98E+01 | 6. 04E+01 | −1. 16E+01 | −9. 09E−01 |

| SURFACE# | C6 | C7 | C8 | C9 | C10 |
|---|---|---|---|---|---|
| 7 | 8. 02E−34 | 5. 09E−39 | −4. 10E−30 | −6. 56E−33 | −1. 05E−35 |

AD: APERTURE DIAPHRAGM
DS: DIFFRACTING SURFACE
IS: IMAGING SURFACE

*FIG.12A*

| EXAMPLE 2: BASIC LENS DATA | | | | |
|---|---|---|---|---|
| Si (SURFACE NUMBER) | Ri (RADIUS OF CURVATURE) | Di (SURFACE SPACING) | Ndj (REFRACTIVE INDEX) | νdj (ABBE NUMBER) |
| 1 (AD) | — | 0. 10066 | | |
| 2 | 3. 5258 | 1. 56239 | 1. 50957 | 56. 5 |
| 3 | −1. 1509 | 0. 90242 | | |
| 4 | −0. 4646 | 0. 50645 | 1. 60595 | 27 |
| 5 | −0. 6399 | 0. 2 | | |
| 6 | ∞ | 0. 3 | 1. 5168 | 64. 2 |
| 7 (DS) | ∞ | 0. 55374 | | |
| 8 (IS) | ∞ | 0 | | |

G1 { 2, 3
G2 { 4, 5
GC { 6, 7 (DS)

*FIG.12B*

| EXAMPLE 2: ASPHERICAL SURFACE DATA | | | | |
|---|---|---|---|---|
| SURFACE# | KA | B3 | B4 | B5 | B6 |
| 2 | −0. 4995947 | −1. 50E−01 | 9. 99E−01 | −2. 93E+00 | 1. 61E+00 |
| 3 | −0. 2979317 | −6. 60E−02 | 1. 26E−01 | −2. 39E−01 | −4. 61E−04 |
| 4 | 0. 0000003 | −2. 1E−01 | 1. 1E−01 | −1. 1E−01 | 3. 0E−01 |
| 5 | −0. 0004664 | −3. 12E−02 | −1. 83E−02 | 4. 01E−02 | 4. 63E−02 |
| SURFACE# | B7 | B8 | B9 | B10 | |
| 2 | 4. 94E+00 | −2. 65E+00 | −1. 40E+01 | 1. 43E+01 | |
| 3 | 9. 60E−02 | −1. 10E−02 | −1. 00E−01 | 6. 43E−02 | |
| 4 | 2. 59E−01 | −5. 35E−02 | −2. 14E−01 | 6. 57E−02 | |
| 5 | 2. 85E−02 | 5. 95E−02 | −1. 34E−02 | −1. 96E−02 | |

*FIG.12C*

| EXAMPLE 2: DIFFRACTING SURFACE DATA | | | | |
|---|---|---|---|---|
| SURFACE# | C1 | C2 | C3 | C4 | C5 |
| 7 | −4. 36E+02 | −3. 80E+01 | 1. 66E+02 | −5. 88E+01 | 4. 86E+00 |
| SURFACE# | C6 | C7 | C8 | C9 | C10 |
| 7 | 7. 32E−37 | 1. 52E−41 | 3. 03E−18 | 2. 12E−20 | 3. 38E−23 |

AD: APERTURE DIAPHRAGM
DS: DIFFRACTING SURFACE
IS: IMAGING SURFACE

*FIG.13A*

| EXAMPLE 3: BASIC LENS DATA | | | | |
|---|---|---|---|---|
| Si (SURFACE NUMBER) | Ri (RADIUS OF CURVATURE) | Di (SURFACE SPACING) | Ndj (REFRACTIVE INDEX) | νdj (ABBE NUMBER) |
| 1 (AD) | — | 0. 10068 | | |
| 2 | 3. 1723 | 1. 6484 | 1. 50957 | 56. 5 |
| 3 | −1. 1382 | 0. 8218 | | |
| 4 | −0. 3987 | 0. 50643 | 1. 50957 | 56. 5 |
| 5 | −0. 543 | 0. 2 | | |
| 6 | ∞ | 0. 3 | 1. 5168 | 64. 2 |
| 7 (DS) | ∞ | 0. 54665 | | |
| 8 (IS) | ∞ | 0 | | |

G1 { 2, 3
G2 { 4, 5
GC { 6, 7(DS)

*FIG.13B*

| EXAMPLE 3: ASPHERICAL SURFACE DATA | | | | |
|---|---|---|---|---|
| SURFACE# | KA | B3 | B4 | B5 | B6 |
| 2 | −0. 5004077 | −1. 71E−01 | 1. 11E+00 | −3. 04E+00 | 1. 47E+00 |
| 3 | −0. 4590436 | −8. 23E−02 | 1. 45E−01 | −2. 57E−01 | −2. 49E−02 |
| 4 | −0. 3174134 | −2. 51E−01 | −9. 58E−02 | −2. 03E−01 | 2. 85E−01 |
| 5 | −0. 025267 | 2. 42E−03 | 7. 07E−02 | 4. 07E−02 | 1. 67E−02 |

| SURFACE# | B7 | B8 | B9 | B10 |
|---|---|---|---|---|
| 2 | 5. 05E+00 | −2. 23E+00 | −1. 38E+01 | 1. 29E+01 |
| 3 | 8. 77E−02 | −2. 64E−03 | −9. 01E−02 | 5. 34E−02 |
| 4 | 2. 62E−01 | −5. 28E−02 | −2. 04E−01 | 1. 16E−01 |
| 5 | 5. 06E−03 | 5. 11E−02 | −1. 05E−02 | −1. 15E−02 |

*FIG.13C*

| EXAMPLE 3: DIFFRACTING SURFACE DATA | | | | |
|---|---|---|---|---|
| SURFACE# | C1 | C2 | C3 | C4 | C5 |
| 7 | −3. 94E+02 | −3. 98E+01 | 6. 04E+01 | −1. 16E+01 | −9. 09E−01 |
| SURFACE# | C6 | C7 | C8 | C9 | C10 |
| 7 | 7. 39E−37 | 1. 83E−41 | 0. 00E+00 | 0. 00E+00 | 0. 00E+00 |

AD: APERTURE DIAPHRAGM
DS: DIFFRACTING SURFACE
IS: IMAGING SURFACE

## FIG.14A

| Si (SURFACE NUMBER) | Ri (RADIUS OF CURVATURE) | Di (SURFACE SPACING) | Ndj (REFRACTIVE INDEX) | νdj (ABBE NUMBER) |
|---|---|---|---|---|
| 1 (AD) | — | −0.130 | | |
| 2 | 1.652 | 0.780 | 1.510852 | 56 |
| 3 | 11.639 | 0.844 | | |
| 4 | −1.427 | 0.601 | 1.533327 | 55.5 |
| 5 | −1.649 | 0.263 | | |
| 6 | 3.984 | 0.959 | 1.510852 | 56 |
| 7 | 2.231 | 0.675 | | |
| 8 | ∞ | 0.400 | 1.518249 | 64.1 |
| 9 (DS) | ∞ | 0.540 | | |
| 10 (IS) | ∞ | 0.000 | | |

EXAMPLE 4: BASIC LENS DATA

G1 { 2, 3
G2 { 4, 5
G3 { 6, 7
GC { 8, 9 (DS)

## FIG.14B

EXAMPLE 4: ASPHERICAL SURFACE DATA

| SURFACE# | KA | B3 | B4 | B5 | B6 |
|---|---|---|---|---|---|
| 2 | 0.5749083 | −2.33E−03 | 8.37E−03 | −4.87E−02 | 1.17E−01 |
| 3 | 1 | −1.57E−02 | 1.79E−01 | −6.33E−01 | 5.85E−01 |
| 4 | 1.2401703 | −1.10E−01 | 2.01E−01 | −2.12E−01 | 3.85E−02 |
| 5 | −1.2396938 | −2.43E−01 | 1.30E−01 | 6.26E−02 | −1.49E−01 |
| 6 | −197.538883 | −8.80E−02 | −7.67E−02 | 4.43E−02 | 2.23E−02 |
| 7 | −14.9754729 | 2.40E−03 | −1.01E−01 | 5.61E−02 | 2.59E−03 |

| SURFACE# | B7 | B8 | B9 | B10 |
|---|---|---|---|---|
| 2 | −2.01E−02 | −9.68E−02 | −3.22E−02 | 7.81E−02 |
| 3 | 8.65E−01 | −2.55E+00 | 2.22E+00 | −7.05E−01 |
| 4 | −2.05E−01 | 3.33E−01 | 4.19E−01 | −4.70E−01 |
| 5 | −3.46E−02 | 1.37E−01 | 1.17E−01 | −1.01E−01 |
| 6 | −2.91E−03 | −9.13E−03 | −2.58E−03 | 3.03E−03 |
| 7 | −1.53E−02 | −1.13E−04 | 4.02E−03 | −1.06E−03 |

## FIG.14C

EXAMPLE 4: DIFFRACTING SURFACE DATA

| SURFACE# | C1 | C2 | C3 | C4 | C5 |
|---|---|---|---|---|---|
| 9 | −2.20E+02 | 3.94E+01 | −5.39E+00 | 4.60E−01 | 4.82E−02 |

| SURFACE# | C6 | C7 | C8 | C9 | C10 |
|---|---|---|---|---|---|
| 9 | −5.61E−04 | −1.00E−03 | −1.18E−04 | −4.40E−06 | 2.44E−06 |

AD: APERTURE DIAPHRAGM
DS: DIFFRACTING SURFACE
IS: IMAGING SURFACE

## FIG.15A

| EXAMPLE 5: BASIC LENS DATA | | | | |
|---|---|---|---|---|
| Si (SURFACE NUMBER) | Ri (RADIUS OF CURVATURE) | Di (SURFACE SPACING) | Ndj (REFRACTIVE INDEX) | νdj (ABBE NUMBER) |
| 1 (AD) | — | -0.13 | | |
| 2 | 1.6573 | 0.77815 | 1.510852 | 56 |
| 3 | 12.1157 | 0.86631 | | |
| 4 | -1.4174 | 0.6 | 1.533327 | 55.5 |
| 5 | -1.5928 | 0.25278 | | |
| 6 | 4.6197 | 0.97319 | 1.510852 | 56 |
| 7 | 2.3038 | 0.675 | | |
| 8 (DS) | ∞ | 0.4 | 1.51825 | 64.1 |
| 9 | ∞ | 0.51593 | | |
| 10 (IS) | ∞ | 0 | | |

G1 { 2, 3
G2 { 4, 5
G3 { 6, 7
GC { 8 (DS), 9

## FIG.15B

| EXAMPLE 5: ASPHERICAL SURFACE DATA | | | | | |
|---|---|---|---|---|---|
| SURFACE# | KA | B3 | B4 | B5 | B6 |
| 2 | 0.4950657 | -3.27E-03 | 1.24E-02 | -5.15E-02 | 1.23E-01 |
| 3 | 1 | -1.60E-02 | 1.75E-01 | -6.26E-01 | 5.81E-01 |
| 4 | 1.2198381 | -1.13E-01 | 2.05E-01 | -2.12E-01 | 3.57E-02 |
| 5 | -1.9262322 | -2.51E-01 | 1.31E-01 | 6.15E-02 | -1.50E-01 |
| 6 | -396.283154 | -8.39E-02 | -7.34E-02 | 4.67E-02 | 2.21E-02 |
| 7 | -11.209915 | -2.90E-02 | -7.96E-02 | 5.45E-02 | 1.56E-03 |
| SURFACE# | B7 | B8 | B9 | B10 | |
| 2 | -3.10E-02 | -9.36E-02 | -2.93E-02 | 7.87E-02 | |
| 3 | 8.66E-01 | -2.56E+00 | 2.21E+00 | -6.96E-01 | |
| 4 | -2.13E-01 | 3.30E-01 | 4.26E-01 | -4.67E-01 | |
| 5 | -3.58E-02 | 1.36E-01 | 1.17E-01 | -9.96E-02 | |
| 6 | -4.05E-03 | -9.83E-03 | -2.74E-03 | 3.32E-03 | |
| 7 | -1.56E-02 | -1.29E-04 | 4.04E-03 | -1.05E-03 | |

## FIG.15C

| EXAMPLE 5: DIFFRACTING SURFACE DATA | | | | | |
|---|---|---|---|---|---|
| SURFACE# | C1 | C2 | C3 | C4 | C5 |
| 8 | -1.65E+02 | 3.20E+01 | -4.81E+00 | 6.29E-01 | 3.20E-02 |
| SURFACE# | C6 | C7 | C8 | C9 | C10 |
| 8 | -5.82E-03 | -1.23E-03 | -9.73E-05 | 9.84E-06 | 1.88E-06 |

EP 2 009 908 A2

AD: APERTURE DIAPHRAGM
DS: DIFFRACTING SURFACE
IS: IMAGING SURFACE

**FIG.16A**

| | | EXAMPLE 6: BASIC LENS DATA | | | |
|---|---|---|---|---|---|
| | Si (SURFACE NUMBER) | Ri (RADIUS OF CURVATURE) | Di (SURFACE SPACING) | Ndj (REFRACTIVE INDEX) | νdj (ABBE NUMBER) |
| | 1(AD) | — | −0.13 | | |
| G1 { | 2 | 1.6547 | 0.76948 | 1.510852 | 56 |
| | 3 | 10.7627 | 0.92554 | | |
| G2 { | 4 | −1.3386 | 0.6 | 1.533327 | 55.5 |
| | 5 | −1.4339 | 0.20745 | | |
| G3 { | 6 | 4.259 | 0.95523 | 1.510852 | 56 |
| | 7 | 1.8863 | 0.675 | | |
| GC { | 8 (DS) | ∞ | 0.4 | 1.51825 | 64.1 |
| | 9 | −48.2018 | 0.52964 | | |
| | 10 (IS) | ∞ | 0 | | |

**FIG.16B**

| | | EXAMPLE 6: ASPHERICAL SURFACE DATA | | | |
|---|---|---|---|---|---|
| SURFACE# | KA | B3 | B4 | B5 | B6 |
| 2 | 0.6274431 | −7.72E−03 | 3.11E−02 | −9.65E−02 | 1.58E−01 |
| 3 | 1 | −1.31E−02 | 1.62E−01 | −5.95E−01 | 5.66E−01 |
| 4 | 1.0700853 | −8.79E−02 | 1.47E−01 | −2.12E−01 | 6.40E−02 |
| 5 | −2.2976438 | −2.99E−01 | 1.31E−01 | 6.45E−02 | −1.43E−01 |
| 6 | −342.36647 | −1.67E−01 | −2.66E−02 | 7.30E−02 | 2.20E−02 |
| 7 | −7.7497134 | −8.10E−02 | −5.54E−02 | 5.45E−02 | 2.65E−03 |
| SURFACE# | B7 | B8 | B9 | B10 | |
| 2 | −2.08E−03 | −1.66E−01 | 2.23E−03 | 8.54E−02 | |
| 3 | 8.65E−01 | −2.56E+00 | 2.21E+00 | −6.83E−01 | |
| 4 | −2.22E−01 | 3.30E−01 | 4.58E−01 | −4.83E−01 | |
| 5 | −3.07E−02 | 1.32E−01 | 1.14E−01 | −9.67E−02 | |
| 6 | −1.15E−02 | −1.55E−02 | −3.81E−03 | 5.52E−03 | |
| 7 | −1.60E−02 | −3.75E−04 | 3.88E−03 | −9.78E−04 | |

**FIG.16C**

| | | EXAMPLE 6: DIFFRACTING SURFACE DATA | | | |
|---|---|---|---|---|---|
| SURFACE# | C1 | C2 | C3 | C4 | C5 |
| 8 | −2.61E+02 | 1.23E+02 | −3.21E+01 | 3.28E+00 | 1.74E−01 |
| SURFACE# | C6 | C7 | C8 | C9 | C10 |
| 8 | −2.87E−02 | −3.83E−03 | −2.90E−05 | 7.43E−05 | −2.78E−06 |

AD: APERTURE DIAPHRAGM
DS: DIFFRACTING SURFACE
IS: IMAGING SURFACE

## FIG.17A

| EXAMPLE 7: BASIC LENS DATA | | | | |
|---|---|---|---|---|
| S i (SURFACE NUMBER) | R i (RADIUS OF CURVATURE) | D i (SURFACE SPACING) | Nd j (REFRACTIVE INDEX) | $\nu$ d j (ABBE NUMBER) |
| 1 (AD) | — | −0.13 | | |
| G1   2 | 1.6922 | 0.77809 | 1.510852 | 56 |
| G1   3 | 13.3617 | 0.91725 | | |
| G2   4 | −1.4458 | 0.6 | 1.533327 | 55.5 |
| G2   5 | −1.5812 | 0.21536 | | |
| G3   6 | 4.9118 | 0.99594 | 1.510852 | 56 |
| G3   7 | 2.1732 | 0.675 | | |
| GC   8 (DS) | ∞ | 0.4 | 1.51825 | 64.1 |
| GC   9 (DS) | ∞ | 0.47624 | | |
| 10 (IS) | ∞ | 0 | | |

## FIG.17B

| EXAMPLE 7: ASPHERICAL SURFACE DATA | | | | |
|---|---|---|---|---|
| SURFACE# | KA | B3 | B4 | B5 | B6 |
|---|---|---|---|---|---|
| 2 | 0.7405992 | −1.03E−02 | 3.48E−02 | −1.10E−01 | 1.58E−01 |
| 3 | 1 | −1.43E−02 | 1.59E−01 | −6.01E−01 | 5.66E−01 |
| 4 | 1.189483 | −6.77E−02 | 1.50E−01 | −2.10E−01 | 5.79E−02 |
| 5 | −2.7798263 | −2.87E−01 | 1.39E−01 | 6.70E−02 | −1.44E−01 |
| 6 | −548.665464 | −1.81E−01 | −2.96E−02 | 7.44E−02 | 2.35E−02 |
| 7 | −16.7275935 | −5.38E−02 | −5.99E−02 | 5.05E−02 | 2.18E−03 |

| SURFACE# | B7 | B8 | B9 | B10 |
|---|---|---|---|---|
| 2 | 1.32E−02 | −1.95E−01 | 4.11E−02 | 5.73E−02 |
| 3 | 8.74E−01 | −2.56E+00 | 2.19E+00 | −6.82E−01 |
| 4 | −2.36E−01 | 3.17E−01 | 4.54E−01 | −4.75E−01 |
| 5 | −3.34E−02 | 1.29E−01 | 1.12E−01 | −9.61E−02 |
| 6 | −1.08E−02 | −1.53E−02 | −3.80E−03 | 5.45E−03 |
| 7 | −1.55E−02 | −9.44E−05 | 3.91E−03 | −1.04E−03 |

## FIG.17C

| EXAMPLE 7: DIFFRACTING SURFACE DATA | | | | |
|---|---|---|---|---|
| SURFACE# | C1 | C2 | C3 | C4 | C5 |
|---|---|---|---|---|---|
| 8 | −1.24E+03 | 1.86E+02 | −3.15E+01 | 3.39E+00 | 1.77E−01 |
| 9 | 1.51E+03 | −1.43E+02 | 1.78E+00 | 6.59E−01 | 1.84E−02 |

| SURFACE# | C6 | C7 | C8 | C9 | C10 |
|---|---|---|---|---|---|
| 8 | −2.98E−02 | −3.97E−03 | −4.73E−05 | 7.21E−05 | −3.47E−06 |
| 9 | −4.02E−03 | −9.46E−04 | −7.53E−05 | 3.32E−06 | 2.91E−06 |

## FIG. 18

| OTHER DATA | | | | | | | |
|---|---|---|---|---|---|---|---|
| | EXAMPLE 1 | EXAMPLE 2 | EXAMPLE 3 | EXAMPLE 4 | EXAMPLE 5 | EXAMPLE 6 | EXAMPLE 7 |
| f | 2. 45 | 2. 53 | 2. 48 | 4. 32 | 4. 32 | 4. 32 | 4. 32 |
| f1 | 1. 93 | 1. 91 | 1. 89 | 3. 67 | 3. 67 | 3. 72 | 3. 71 |
| f2 | 10. 04 | 28. 87 | 15. 57 | −323. 11 | 127. 50 | 31. 74 | 58. 49 |
| f3 | 14. 59 | 13. 18 | 14. 59 | −12. 70 | −10. 47 | −7. 67 | −8. 69 |
| f4 | | | | 26. 15 | 34. 80 | 17. 83 | −30. 60 |
| f3/f or f4/f | 5. 96 | 5. 21 | 5. 88 | 6. 05 | 8. 06 | 4. 13 | −7. 08 |
| Dlast | 0. 605 | 0. 55 | 0. 55 | 0. 54 | 0. 52 | 0. 53 | 0. 48 |

EXAMPLE 1

F-LINE

d-LINE

C-LINE

-0. 10
(mm)

0. 10
(mm)

SPHERICAL ABERRATION

**FIG. 19A**

S

T

-0. 10
(mm)

0. 10
(mm)

ASTIGMATISM

**FIG. 19B**

-5. 00
(%)

5. 00
(%)

DISTORTION

**FIG. 19C**

EXAMPLE 2

F-LINE

d-LINE

C-LINE

-0. 10
(mm)

0. 10
(mm)

SPHERICAL ABERRATION

**FIG. 20A**

S

T

-0. 10
(mm)

0. 10
(mm)

ASTIGMATISM

**FIG. 20B**

-5. 00
(%)

5. 00
(%)

DISTORTION

**FIG. 20C**

EXAMPLE 3

F-LINE
C-LINE
d-LINE

-0.10
(mm)

0.10
(mm)

SPHERICAL ABERRATION

**FIG. 21A**

S
T

-0.10
(mm)

0.10
(mm)

ASTIGMATISM

**FIG. 21B**

-5.00
(%)

5.00
(%)

DISTORTION

**FIG. 21C**

EXAMPLE 4

F-LINE
C-LINE
d-LINE

-0.10
(mm)

0.10
(mm)

SPHERICAL ABERRATION

**FIG. 22A**

S
T

-0.10
(mm)

0.10
(mm)

ASTIGMATISM

**FIG. 22B**

-5.00
(%)

5.00
(%)

DISTORTION

**FIG. 22C**

EXAMPLE 5

-0. 10 (mm)  0. 10 (mm)

SPHERICAL ABERRATION

FIG. 23A

-0. 10 (mm)  0. 10 (mm)

ASTIGMATISM

FIG. 23B

-5. 00 (%)  5. 00 (%)

DISTORTION

FIG. 23C

EXAMPLE 6

-0. 10 (mm)  0. 10 (mm)

SPHERICAL ABERRATION

FIG. 24A

-0. 10 (mm)  0. 10 (mm)

ASTIGMATISM

FIG. 24B

-5. 00 (%)  5. 00 (%)

DISTORTION

FIG. 24C

EXAMPLE 7

F-LINE

C-LINE

d-LINE

-0. 10
(mm)

0. 10
(mm)

SPHERICAL ABERRATION

*FIG. 25A*

S

T

-0. 10
(mm)

0. 10
(mm)

ASTIGMATISM

*FIG. 25B*

-5. 00
(%)

5. 00
(%)

DISTORTION

*FIG. 25C*

**EP 2 009 908 A2**

**Patent documents cited in the description**

- JP 2007168010 A

- JP 3685486 B